# DEMANDE DE BREVET EUROPEEN

(11) **EP 0 638 389 A1**
(43) Date de publication de la demande: **15.02.1995**
(21) Numéro de dépôt: 94401712.8
(22) Date de dépôt: 26.07.1994
(51) Int. Cl.: B23Q 11/04

(54) **Potence de perçage**

(30) Priorité: 10.08.1993 FR 9309819
(71) Demandeur: SOCIETE DE PROSPECTION ET D'INVENTIONS TECHNIQUES SPIT, F-26501 Bourg-Les-Valence Cédex (FR)
(72) Inventeur: Choveau, Gérard, F-07300 Saint Jean de Muzols (FR); Ronjon, Claude, F-26000 Valence (FR)
(74) Mandataire: Bloch, Gérard

(57) **Abrégé**

Potence de percage comportant un poteau (3) le long duquel un coulisseau (4) porte-perceuse peut coulisser sous l'action d'un moteur de coulissement (5) et de moyens de commande du moteur.

Le moteur de coulissement (5) est à vitesse fixe, les moyens de commande du moteur sont agencés pour être contrôlés par un capteur de courant et des moyens porte-perceuse (10) sont montés sur le coulisseau (4) libres en coulissement, contre l'action de moyens de rappel (12, 13), d'une position de repos à une position de marche du moteur.

## Description

L'invention concerne de façon générale les perceuses . Une perceuse est un porte-outil pourvu d'un moteur d'entrainement en rotation d'un outil de perçage. Le perçage d'un trou par l'outil s'effectue par un double entrainement de l'outil, en rotation, par rapport à la perceuse, et en translation avec la perceuse. Lorsque, au cours de l'opération de perçage, ainsi d'ailleurs qu'au cours de l'extraction de l'outil après perçage du trou, l'effort de l'outil devient trop important, que sa vitesse de rotation diminue et, donc, que l'intensité du courant du moteur d'entrainement en rotation de la perceuse augmente, il faut également diminuer la vitesse d'entrainement en translation de la perceuse et de son outil.

Une opération de perçage d'un trou par une perceuse, par exemple dans du béton, s'effectue généralement à l'aide d'une potence de perçage pourvue d'un coulisseau porte-perçeuse monté pour coulisser le long d'un poteau sous la commande d'un moteur de coulissement. Jusqu'à maintenant, le problème de la prise en compte de l'effort de l'outil était résolu au moyen d'un moteur de coulissement à variateur de vitesse, permettant de descendre rapidement l'outil de la perceuse au contact du matériau à percer avant de réduire la vitesse d'avance de l'outil pour le perçage.

Compte-tenu du prix des variateurs de vitesse, la demanderesse a cherché à s'en affranchir et c'est ainsi qu'elle propose son invention.

L'invention concerne donc une potence de perçage comportant un poteau le long duquel un coulisseau porte-perceuse peut coulisser sous l'action d'un moteur de coulissement et de moyens de commande du moteur, caractérisée par le fait que le moteur de coulissement est à vitesse fixe, que les moyens de commande du moteur sont agencés pour être contrôlés par un capteur de courant et que des moyens porte-perceuse sont montés sur le coulisseau libres en coulissement, contre l'action de moyens de rappel, d'une position de repos à une position de marche du moteur.

Quand le moteur est mis en marche, et contre l'action des moyens de rappel, il entraine en déplacement relatif le coulisseau et les moyens porte perceuse jusqu'à ce que ces moyens atteignent leur position de marche et deviennent alors solidaires en coulissement du coulisseau. Quand le moteur est arrêté, les moyens de rappel entrainent en déplacement relatif, dans le même sens, le coulisseau et les moyens porte-perceuse jusqu'à ce que ces moyens atteignent leur position de repos ou soient à nouveau entrainés par le coulisseau après remise en marche du moteur.

Quant à la mise en marche et l'arrêt du moteur, ils sont donc contrôlés par le capteur de courant que l'opérateur de la perceuse aura connecté au moteur rotatif de la perceuse.

Finalement, la demanderesse propose de remplacer un moteur à variateur de vitesse par un moteur à vitesse fixe associé à un compensateur mécanique.

De préférence, les moyens de commande du moteur comprennent un comparateur à seuil auquel est connecté le capteur.

Dans ce cas, avantageusement, dès que le seuil est dépassé, le moteur de coulissement est arrêté et les moyens de rappel reviennent en position de repos pour continuer de faire coulisser les moyens porte-perceuse.

Tant que l'intensité du courant du moteur rotatif de la perceuse est inférieur au seuil, la perceuse est solidaire en déplacement du coulisseau. Au-delà, le moteur de coulissement est arrêté.

Avantageusement, le comparateur est un comparateur à double seuil, haut et bas.

Dès que l'intensité du courant du moteur de la perceuse descend en dessous du seuil bas, le moteur de coulissement de la potence est remis en marche.

Avantageusement, les moyens porte-perceuse sont montés sur le coulisseau pour coulisser d'une position de repos milieu à l'une ou l'autre de deux positions extrêmes (basse et haute) de marche du moteur.

Dans ce cas,le compensateur mécanique de l'invention fonctionne aussi bien en avance, lors du perçage, qu'en recul, lors de l'extraction de l'outil après perçage.

Dans une forme de réalisation intéressante de la potence de l'invention, il est prévu une chape porte-perçeuse à deux oreilles disposées de part et d'autre d'un ergot d'entrainement du coulisseau, avec au moins un ressort de compression entre l'une des deux oreilles et l'ergot, de préférence, un ressort entre chaque oreille et l'ergot.

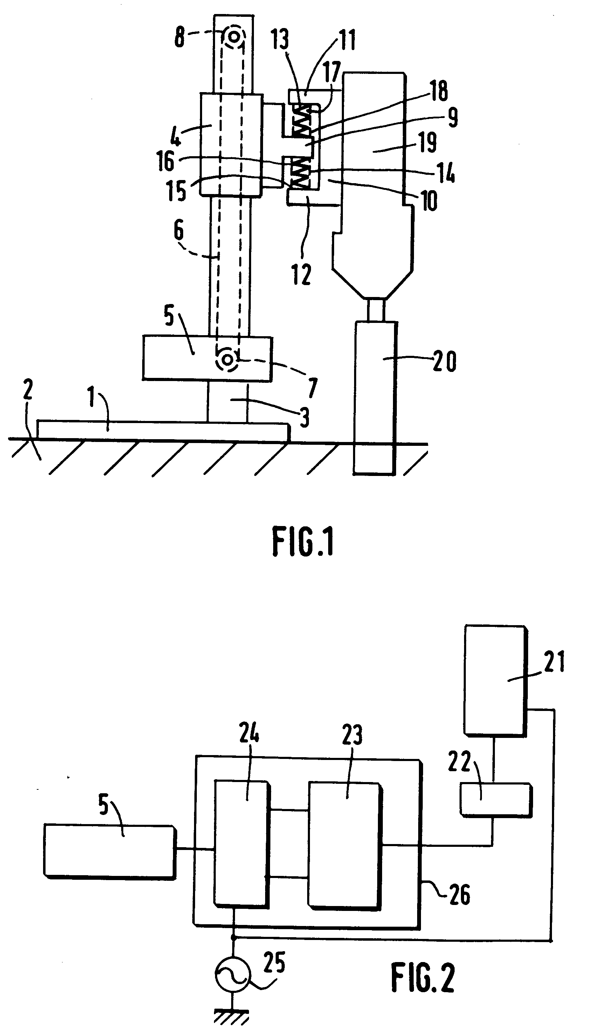

L'invention sera mieux comprise à l'aide de la description suivante de la forme de réalisation préférée de la potence, en référence au dessin annexé, sur lequel
- la figure 1 est une vue en élévation de la potence portant une perceuse avec son outil et
- la figure 2 est un schéma du circuit de commande électrique du moteur de coulissement de la potence de la figure 1.

La potence comporte un pied 1, destiné à être mis en appui contre le matériau 2 dans lequel un trou doit être percé, et un poteau 3 fixé perpendiculairement au pied 1. Un coulisseau 4 est monté sur le poteau pour coulisser, dans un sens et dans l'autre, sous l'action d'un moteur de coulissement 5, fixé au poteau 3 et, ici, d'une chaine sans fin 6 entraînée par un pignon de sortie 7 du moteur 5 et montée sur un pignon de détour 8 disposé à l'extrémité du poteau opposée au pied de potence 1. Le coulisseau 4 porte un doigt d'entrainement solidarisé à l'un des deux brins de la chaine 6.

Le coulisseau 4 porte un ergot d'entrainement 9, s'étendant sensiblement orthogonalement au poteau 3 et sur l'ergot 9 est montée une chape 10 porte-perceuse à deux oreilles 11, 12 disposées de part et d'autre de l'ergot 9 avec deux ressorts de compression 13, 14 entre les deux oreilles de la chape et l'ergot, les extrémités de chaque ressort étant latéralement maintenues par deux bagues de butée 15-18 solidaires de l'oreille de la chape correspondante et de l'ergot du coulisseau.

Une perceuse 19 est fixée à la chape 10, du côté opposé à celui de ses oreilles d'entrainement, avec un outil de perçage 20.

L'outil 20 est solidaire de l'arbre de sortie du moteur rotatif 21 de la perceuse. L'outil 20 peut donc être entrainé en rotation, par rapport à la perceuse 19, et en translation, avec la perceuse 19.

Le moteur de coulissement, à vitesse fixe, peut être mis sous tension et raccordé au secteur 25 par un circuit de commutation 24 d'un module de commande 26 comprenant encore, relié à l'entrée du circuit de commutation 24, un comparateur 23 à double seuil, haut et bas.

Le module de commande 26 est contrôlé par un capteur de courant 22 relié entre l'entrée du comparateur 23 et le moteur rotatif 21 de la perceuse 19.

Le fonctionnement de la potence va maintenant être décrit.

Le moteur 21 de la perceuse étant mis en marche par raccordement au secteur 25, et son courant ne dépassant aucun des deux seuils haut et bas du comparateur 23, par actionnement manuel du commutateur 24, on met en marche le moteur de coulissement 5 pour entraîner l'outil 3 au contact du matériau 2 et commencer l'opération de perçage. Durant cette première phase, sous l'effet de la pression exercée par le moteur 5 et de la résistance de perçage, l'ergotd'entrainement 9 a comprimé le ressort d'avance 14 contre l'oreille 12 de la chape 10, l'ergot d'entrainement 9 est venu en butée, contre le ressort comprimé, en positon de marche et la chape 10 est ainsi devenue solidaire en coulissement du coulisseau 4. Du fait de l'effort de l'outil, le courant du moteur de perceuse 21, détecté par le capteur 22, augmente et, quand il dépasse le seuil haut du comparateur 23, par le commutateur 24, le moteur de coulissement 5 est arrêté, ce qui réduit l'effort de perçage et fait chuter le courant dans le moteur de perceuse 21. Dès que le moteur 5 est arrêté, et avec lui le coulisseau 4 et son ergot d'entrainement 9, le ressort d'avance 14 se détend pour continuer de faire avancer la perceuse. Dès que le courant dans le moteur de perceuse 21 devient inférieur au seuil bas du comparateur 23, un peu avant que l'ergot d'entrainement 9 ne soit revenu en position de repos entre les deux oreilles 11, 12 de la chape 10, ressorts 13, 14 détendus, le commutateur 24 remet en marche le moteur de coulissement 5 et ainsi de suite par phases d'entrainement de la perceuse 19 par le moteur de coulissement 5 respectivement suivies de phases d'entrainement de la perceuse par le ressort d'avance 14 à vitesse plus réduite.

En sens inverse, lors du recul de la perceuse 19 pour extraire l'outil 20 du trou après perçage, le processus peut être identique, avec des phases de recul de la perceuse 19 sous l'action du moteur 5 suivies respectivement de phases de recul, à vitesse réduite, sous l'action du ressort de recul 13, alternativement comprimé contre l'oreille 11 de la chape 10 et en cours de détente.

On notera que la vitesse d'entrainement en coulissement de la perceuse imprimée par le moteur 5 est avantageusement légèrement supérieure à la vitesse optimale de perçage, la différence étant compensée par la chape de compensation qui vient d'être décrite.

## Revendications

**1.** Potence de percage comportant un poteau (3) le long duquel un coulisseau (4) porte-perceuse peut coulisser sous l'action d'un moteur de coulissement (5) à vitesse fixe et de moyens (26) de commande du moteur, caractérisé par le fait que le moteur de coulissement (5) est à vitesse fixe, que les moyens (26) de commande du moteur sont agencés pour être contrôlés par un capteur de courant (22) et que des moyens porte-perceuxe (10) sont montés sur le coulisseau (4) libres en coulissement, contre l'action de moyens de rappel (12, 13), d'une position de repos à une position de marche du moteur.

**2.** Potence selon la revendication 1, selon laquelle les moyens (26) de commande du moteur (5) comprennent un comparateur à seuil (23) auquel est connecté le capteur (22).

**3.** Potence selon la revendication 2, dans laquelle, dès que le seuil est dépassé, le moteur de coulissement (5) est arrêté et les moyens de rappel (12, 13) reviennent en position de repos pour continuer de faire coulisser les moyens porte-perceuse (10).

**4** Potence selon l'une des revendications 2 et 3, dans laquelle le comparateur (23) est un comparateur à double seuil haut et bas.

**5.** Potence selon l'une des revendications 1 à 4, dans laquelle les moyens porte-perceuse (10) sont montés sur le coulisseau (4) pour coulisser d'une position de repos milieu à l'une ou l'autre de deux positions extrêmes de marche du moteur.

**6.** Potence selon la revendication 5, dans laquelle il est prévu une chape porte-perceuse (10) à deux oreilles (11, 12) disposées de part et d'autre d'un ergot d'entrainement (9) du coulisseau (4), avec au moins un ressort de compression (13, 14) entre l'une des deux oreilles (11, 12) et l'ergot (9).

**7.** Potence selon la revendication 6, dans laquelle il est prévu un ressort (13, 14) entre chaque oreille (11, 12) de la chape (10) et l'ergot d'entrainement (9) du coulisseau (4).
